# FASCICULE DE BREVET EUROPEEN

(11) **EP 0 433 107 B1**
(45) Date de publication et mention de la délivrance du brevet: **26.01.1994**
(21) Numéro de dépôt: 90403153.1
(22) Date de dépôt: 07.11.1990
(51) Int. Cl.: C22B 3/26, C22B 58/00, C01G 15/00

(54) **Procédé de récupération de gallium à partir de solutions basiques les contenant**
Verfahren zur Gewinnung von Gallium aus basischen Lösungen
Process for the recovery of gallium from basic solution

(30) Priorité: 15.11.1989 FR 8914985
(43) Date de publication de la demande: 19.06.1991
(73) Titulaire: RHONE-POULENC CHIMIE, 92408 Courbevoie Cédex (FR)
(72) Inventeur: Pescher, Yvette, F-92220 Bagneux (FR); Sabot, Jean-Louis, F-78600 Maisons Laffitte (FR)
(74) Mandataire: Esson, Jean-Pierre

(56) Documents cités:
- EP-A- 0 053 971
- EP-A- 0 054 461
- EP-A- 0 234 319
- EP-A- 0 265 356
- US-A- 3 971 843
- US-A- 4 631 177

## Description

La présente invention concerne un procédé de récupération de gallium à partir de solutions basiques le contenant telles que les solutions d'aluminate de sodium provenant du procédé Bayer pour la production de l'alumine.

L'invention s'applique plus particulièrement au procédé de récupération du gallium par extraction de celui-ci au moyen d'un agent extractant à base d'hydroxyquinoléine substituée.

On connaît, notamment d'après les brevets français n° 2.277.897, 2.307.047, 2.307.882, 2.495,601, 2.532,295, 2.532.296 un procédé de récupération du gallium présent dans des solutions aqueuses alcalines par extraction liquide/liquide au moyen d'une phase organique contenant un agent extractant et un solvant organique, et réextraction du gallium par lavage de la phase organique chargée par une solution aqueuse acide.

Il a également été proposé d'utiliser une résine pour supporter l'agent extractant et extraire le gallium par passage de la solution alcaline sur cette résine. De manière analogue, le gallium est récupéré par lavage de la résine chargée en gallium par une solution acide. Ainsi, les demandes de brevet japonaises n° 60042234 et n° 5896831, européens n°258146 et 265356 citent des exemples de résines pouvant être utilisées comme support de l'agent d'extraction identique à celui utilisé dans le procédé d'extraction liquide/liquide.

Ces procédés d'extraction liquide/liquide ou de passage sur résine contenant l'agent extractant consistent, sommairement, à faire passer le gallium contenu dans la solution basique, dans le milieu (phase organique ou résine) contenant l'agent extractant par mise en contact de ces deux milieux. Dans une seconde étape le gallium est réextrait par mise en contact du milieu (phase organique ou résine) chargé en gallium avec une solution aqueuse acide. La solution acide ainsi recueillie peut être ensuite purifiée par de nombreux procédés pour éliminer les cations coextraits avec le gallium, tel que par exemple le sodium et l'aluminium. A titre d'exemple, on peut citer les procedés de purification décrits dans les brevets français n° 2 495 599, 2 495 600 et 2 495 601 de la demanderesse.

La solution purifiée est ensuite utilisée comme matière première pour la production de gallium métal ou de composés contenant du gallium.

Le gallium se trouve généralement à l'état d'impuretés dans des minerais naturels, et plus particulièrement dans les minerais d'aluminium tels que les bauxites.

En conséquence, la plus grande partie du gallium produit est récupérée dans la solution d'aluminate de sodium ou lessive Bayer circulant dans le procédé Bayer de récupération de l'alumine.

Cette lessive Bayer est, après récupération du gallium, recyclée dans le circuit du procédé Bayer.

Comme cette lessive Bayer est très fortement basique, une quantité importante des ions sodium seront extraits lors de la mise en contact avec le milieu extractant, rendant celui-ci également très basique. Il est donc nécessaire, dans les procédés actuels, de neutraliser cette basicité lors de la réextraction du gallium par une solution acide, entraînant ainsi une consommation élevée d'acide.

En outre, il sera également nécessaire d'ajuster le pH de la liqueur Bayer recyclée dans le circuit de fabrication de l'alumine, par addition de soude, pour ne pas perturber le fonctionnement de ce circuit.

La présente invention a notamment pour but de remédier à ces inconvénients en proposant un procédé de récupération du gallium à partir de solutions basiques le contenant, permettant de diminuer les consommations en acide ainsi que d'améliorer la qualité de la liqueur Bayer recyclée.

A cet effet, l'invention propose un procédé de récupération de gallium à partir d'une solution basique (A) le contenant, consistant à mettre en contact cette solution basique (A) avec un milieu (I) contenant un agent extractant du gallium pour ainsi faire passer le gallium depuis la solution (A) dans le milieu (I), et après séparation du milieu (I) et de la solution (A), réextraire le gallium par mise en contact du milieu (I) chargé avec une phase aqueuse (B) et séparer le milieu (I) de la phase aqueuse (B).

Ce procédé se caractérise en ce qu'on utilise comme phase aqueuse (B) une solution aqueuse basique et de plus en ce qu'on réextrait le gallium de cette solution aqueuse basique (B) par mise en contact avec un milieu (II) contenant un agent extractant du gallium pour ainsi faire passer le gallium de la solution basique (B) dans le milieu (II), puis après séparation de la solution basique (B) et du milieu (II) à réextraire le gallium par mise en contact du milieu (II) chargé avec une solution aqueuse (C) et à récupérer une solution aqueuse de gallium par séparation de la solution (C) du milieu (II). Cette solution (C) est plus concentrée en gallium que la solution basique (B).

Les agents extractants contenus dans les milieux (I) et (II) peuvent être identiques ou différents.

Dans un mode de réalisation préféré de l'invention les deux agents extractants sont identiques. Avantageusement, au moins une partie du milieu (II) peut être recyclé dans le milieu (I) soit directement après réextraction du gallium, soit après un traitement tel qu'un lavage.

Parmi les agents extractants convenables à l'invention on citera plus particulièrement ceux appartenant à la famille des hydroxyquinoléines substituées.

Les hydroxyquinoléines substituées convenant pour l'invention sont celles pouvant extraire le gallium par complexation dans les conditions du procédé de l'invention, c'est à dire, notamment en milieu basique, et de plus doivent être solubles en milieu organique et insolubles, ou nettement moins solubles en milieu aqueux.

Ainsi, les hydroxyquinoléines substituées convenant aux fins de l'invention sont notamment celles de formule générale suivante : 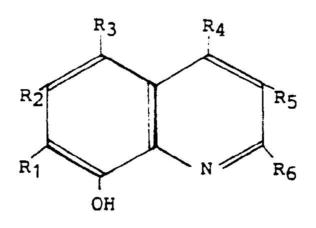
dans laquelle R₁, R₂, R₃, R₄, R₅, R₆ identiques ou différents sont choisis parmi le groupe constitué par l'hydrogène, les halogènes, les radicaux alkyle, alcényle, alicyclique, aryle ; R₁, R₂, R₃, R₄, R₅, R₆ ne pouvant représenter simultanément l'hydrogène. Parmi ces hydroxyquinoléines substituées, celles convenant particulièrement bien aux fins de l'invention sont notamment les α-alcényl hydroxy-8 quinoléines, les β-alcényl hydroxy-8 quinoléines et les alkyl hydroxy-8 quinoléines.

Les α alcényl hydroxy-8 quinoléines préférées selon l'invention ont pour formule générale : 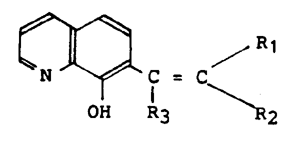
dans laquelle R₁, R₂, R₃ représentent un hydrogène ou un groupement hydrocarboné. Parmi celles-ci on utilisera notamment celles de formule générale : 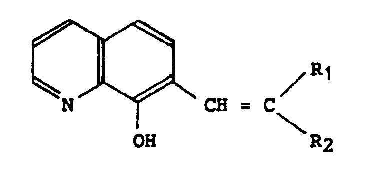
ou

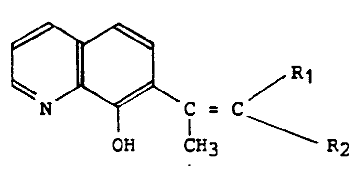

Les β alcényl hydroxy-8 quinoléines préférées selon l'invention ont pour formule générale : 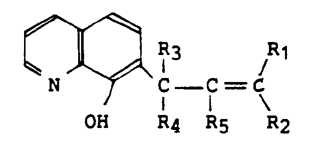
dans laquelle R₁, R₂, R₃, R₄, R₅ représentent un hydrogène ou un groupement hydrocarboné.

Les alkyl hydroxy-8 quinoléines préférées selon l'invention ont pour formule : 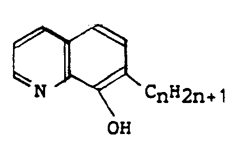
dans laquelle n est compris entre 1 et 20, et, de préférence, entre 5 et 15.

Ces hydroxyquinoléines peuvent être mises en oeuvre selon l'invention, seules ou en mélange.

Ces agents extractants peuvent être mis en oeuvre soit en solution dans un solvant organique, l'extraction étant réalisée selon le procédé appelé "extraction liquide/liquide", soit imprégnée ou supportée par un substrat poreux retenant l'agent extractant, l'extraction étant réalisée par passage de la solution contenant le gallium sur ce substrat poreux chargé en agent extractant.

Dans la première variante du procédé, le milieu (I) et/ou le milieu (II) est une phase organique contenant un solvant organique non miscible à l'eau et un ou plusieurs agents extractants tels que définis ci-dessus.

Les solvants organiques convenables et habituellement utilisés sont, par exemple, les diluants mis en oeuvre en extraction liquide/liquide, utilisés seuls ou en mélange. Parmi ceux-ci, on peut citer les hydrocarbures aliphatiques comme, par exemple, l'heptane et les coupes pétrolières du type kérosène ; les hydrocarbures aromatiques comme, par exemple, le benzène, le toluène, le xylène et les coupes du type SOLVESSO (marque déposée par la société EXXON) et, enfin, les dérivés halogénés de ces composés comme, par exemple, le chloroforme et le tétrachlorure de carbone,le dichloroéthane et le trichloropropane.

La proportion d'agents extractants dans la phase organique n'est pas critique et peut varier dans de larges limites.

Toutefois, une concentration comprise entre 1 % et 50 % en volume rapportés à la phase organique convient généralement.

La phase organique peut également contenir différents additifs tels que, par exemple, des accélérateurs de la vitesse d'extraction du gallium, des agents tensio-actifs pour favoriser le mélange des phases. Cette liste n'est pas exhaustive et est donnée uniquement à titre indicatif.

Dans la seconde variante du procédé, le milieu (I) et/ou le milieu (II) est constituée par un substrat solide et poreux sur lequel est fixé de manière chimique ou physique, l'agent extractant.

Généralement ce substrat peut être une résine synthétique adsorbante ou échangeuse d'ions, telles que les résines commercialisées sous les noms commerciaux : "Amberlite", les résines "encagées" commercialisées par la société Bayer sous la marque "LEWATIT", les charbons actifs ou analogues.

Des exemples de résines sont notamment données dans les brevets japonais n° 60042234, 5896831, européens 258146, 265356.

Les conditions de concentration, rapport de phase, température et pH de l'extraction du gallium depuis la solution basique (A) dans le milieu (I) sont habituelles et notamment décrites dans les brevets et demandes de brevet cités ci-dessus.

Par solution basique (A) contenant du gallium, on entend toutes solutions basiques soit artificielles soit provenant de procédés chimiques tels que les procédés de traitement de minerais naturels.

Ainsi, la solution basique généralement utilisée comme source de gallium est une solution d'aluminate de sodium appelée également "Lessive Bayer" provenant du circuit de traitement des minerais de Bauxite pour en extraire l'alumine, selon le procédé dit Bayer. Cette solution basique est recyclée dans le circuit du procédé Bayer après l'extraction du gallium.

Selon une caractéristique de l'invention, le gallium se trouvant dans le milieu (I) après séparation de le solution basique, est réextrait de ce milieu par mise en contact avec une solution (B) de base forte.

Comme solution de base forte (B) préférée de l'invention, on peut citer une solution de soude, notamment quand la solution (A) contient des ions sodium. Toutefois, d'autres hydroxydes, tels que les autres hydroxydes alcalins peuvent être utilisés.

La concentration en hydroxyde de cette solution est comprise entre 4N et 20N, avantageusement entre 6N et 12N.

Cette réextraction par une solution de base forte permet d'obtenir une solution de gallium à une concentration plus élevée que dans la solution A, et évite une consommation importante d'acide nécessaire pour neutraliser la basicité du milieu (I) due à l'extraction des ions sodium.

La solution basique de gallium obtenue comprend de nombreuses impuretés en concentration plus ou moins élevée, telles que notamment l'aluminium et le sodium. En outre, cette solution basique présente un pH souvent trop élevé et une concentration en gallium trop faible pour être utilisée directement dans les procédés de production de gallium métal tels que, par exemple, l'électrolyse.

Le procédé de l'invention permet de produire de telles solutions de gallium présentant un pH et une concentration en gallium convenables, par mise en oeuvre d'une seconde extraction du gallium à partir de la solution basique (B) au moyen du milieu (II), et réextraction du gallium contenu dans le milieu (II) par une solution (C).

Cette solution aqueuse (C) peut être une solution acide telle qu'une solution d'acide chlorhydrique, d'acide nitrique, d'acide sulfurique, un mélange d'acides ou analogues.

Cette récupération du gallium par une solution acide peut se faire selon plusieurs variantes.

Ainsi, il est possible de réextraire le gallium avec une solution concentrée d'acides forts en une seule étape, ou dans une première étape extraire uniquement le sodium et l'alumium avec une solution diluée d'acides forts puis dans une seconde étape réextraire le gallium avec une solution concentrée d'acides forts.

Dans ces variantes le solvant d'extraction subit un lavage avant son recyclage pour ainsi éviter la présence d'acide lors de l'extraction du gallium.

Ces différentes variantes de réextraction du gallium par une solution d'acides forts sont décrites dans les brevets cités précédemment, qui font partie intégrante de la présente description.

La solution aqueuse (C) peut également être une solution d'une base forte telle qu'une solution de soude ou d'un hydroxyde d'alcalin. Dans ce cas,le pH de la solution basique doit être compris entr 4N et 20N, de préférence entre 6N et 12N.

Le procédé de l'invention permet par cette double extraction ou extraction en deux cycles du gallium, de produire une solution de gallium compatible avec les procédés de production de gallium métal, tant d'un point de vue pureté, pH, ou teneur en gallium.

Selon une caractéristique préférée de l'invention, la solution basique (B) chargée en gallium est diluée avant d'être mise en contact avec le milieu (II) pour ainsi avoir des conditions de pH et de concentration compatibles avec un coefficient de partage du gallium entre la solution aqueuse et le milieu (II).

Cette dilution est notamment nécessaire quand le milieu (II) est semblable au milieu (I), notamment quand la nature de l'agent extractant, du solvant ou du substrat est identique.

Toutefois, cette dilution de la solution (B) peut être supprimée si les milieux (I) et (II) sont différents dans leur nature ou concentration.

Selon une autre caractéristique de l'invention, la solution basique (B) récupérée après sa mise en contact avec le milieu (II) et donc extraction du gallium peut être recyclée au moins partiellement dans la solution basique (A) épurée en gallium. Ce recyclage est particulièrement intéressant pour l'économie du procédé quand la solution basique (A) est une lessive Bayer. En effet, la soude, dans un circuit Bayer de production d'alumine, est un des réactifs consommés. En conséquence, la soude utilisée pour extraire le gallium qui est ensuite réinjectée dans la lessive Bayer, représente une partie de la soude consommée par le circuit Bayer.

Selon une autre caractéristique de l'invention, le milieu (II) contenant un agent extractant peut être au moins partiellement recyclé dans le milieu (I) après éventuellement un traitement tel qu'un lavage.

D'autres buts, avantages et caractéristiques de l'invention apparaîtront plus clairement au vu de la description d'un mode de réalisation du procédé de l'invention et des exemples donnés uniquement à titre indicatif.

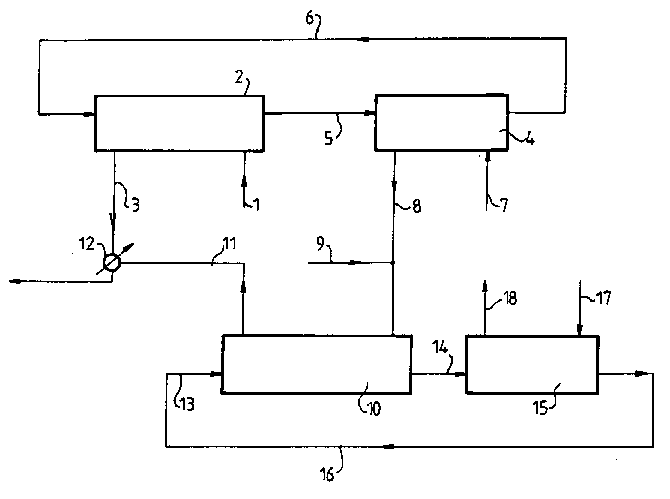

En se référant à la figure unique qui représente un schéma synoptique du procédé de l'invention, la lessive Bayer est alimentée en 1 dans une batterie 2 d'extraction liquide-liquide comprenant plusieurs étages de mélangeurs-décanteurs et ressort de cette batterie en 3. Une solution organique (milieu I) comprenant un agent d'extraction est alimenté à contre-courant du flux de lessive Bayer dans la batterie 2.

La phase organique chargée en gallium ressort en 5 de la batterie 2 et est alimentée dans une nouvelle batterie 4 d'extraction. La phase organique épurée en gallium ressort de la batterie 4 pour être réalimentée dans la première batterie 2 par la boucle 6.

Une solution basique (B) est alimentée en 7 à contre-courant dans la batterie 5 et ressort en 8 chargée en gallium.

Cette solution basique (B) chargée en gallium est alimentée, après éventuellement dilution par ajout d'eau en 9 dans une batterie 10 d'extraction liquide/liquide.

Cette solution basique épurée en gallium sort de la batterie 10 par le conduit 11 et est recyclée, après évaporation éventuelle en 12 dans la lessive Bayer 3 épurée en gallium.

Une seconde phase organique (milieu II) est alimentée en 13, à contre-courant, dans la batterie d'extraction 10. La phase organique chargée en gallium sortant en 14 de la batterie 10 est alimentée dans une batterie 15 de mélangeurs-décanteurs et en ressort pour être recyclée dans la batterie 10 par la boucle 16.

Une solution aqueuse (C) est alimentée en 17 dans la batterie 15, à contre-courant de la phase organique. Cette solution chargée en gallium ressort de la batterie 15 en 18.

Il est bien entendu possible de remplacer les batteries d'extraction liquide-liquide par d'autres appareillages adaptés notamment à la mise en oeuvre des substrats poreux chargés en agent extractant. Ainsi on peut utiliser une colonne remplie de résine ou une batterie de colonnes.

Par ailleurs, il est possible de prévoir des traitements de la phase organique (milieu I ou milieu II) avant son recyclage dans les batteries d'extraction. Un tel traitement peut être un lavage à l'eau ou avec une solution faiblement basique, notamment pour le milieu (II).

Les conditions de fonctionnement des batteries d'extraction peuvent être très différentes. Ainsi, il est possible de travailler sous atmosphère inerte, ou en absence d'atmosphère, par exemple.

En outre, les conditions hydrodynamiques de fonctionnement des batteries d'extraction telles que les débits de phase organique et de phase aqueuse, les vitesses d'agitation des mélangeurs, les conditions de décantation sont classiques pour l'homme de métier du domaine technique et décrits par exemple dans les brevets ci-dessus donnés.

Les exemples ci-dessous illustreront le procédé de l'invention et ses avantages.

### Exemple 1

Une solution d'aluminate de sodium provenant d'un cycle Bayer de fabrication d'alumine, appelée également "Lessive Bayer" de composition suivante est alimentée dans une batterie de mélangeurs-décanteurs :
- Al₂O₃ :: 80 g/l
- NaO :: 205 g/l
- Ga :: 225 mg/l

Un solvant d'extraction contenant 0,25 mole/l d'une hydroxyquinoléine substituée, à substituant hydrocarboné saturé et commercialisée par la société Schering sous le nom commercial " Kelex 100 " dissout dans du kérosène est alimenté dans la batterie 2. Ce solvant contient également 10 % en poids de décanol et 0,25 mole/l d'acide "Versatic 10".

Le solvant sortant de la batterie d'extraction 2 est alimenté dans une seconde batterie 4 dans laquelle le gallium est réextrait par une solution de soude 9N.

La solution de soude chargée de gallium contient 1,35 g/l de gallium et 9 g/l d'aluminium.

Avant son introduction dans un second cycle d'extraction / réextraction, cette solution de soude est diluée par addition d'eau pour avoir une concentration en [OH]⁻ égale à 3N.

Dans ce second cycle d'extraction / réextraction, on utilise un solvant d'extraction identique à celui utilisé dans le premier cycle.

Le gallium est réextrait de la phase organique par une solution d'acide sulfurique 8 N. La solution acide recueillie contient 18 g/l de gallium, 3,6 g/l d'aluminium, 754 g/l de SO₄²⁻ et une concentration en H+ égale à 4N.

Cette solution acide de gallium peut être purifiée, et utilisée dans les procédés de fabrication de gallium métal tel que l'électrolyse.

Le solvant d'extraction sortant de la batterie de réextraction est lavé par de l'eau pour éliminer les impuretés présentes telles que les sulfates. L'eau de lavage est avantageusement mélangée avec la solution acide utilisée pour la réextraction du gallium.

En outre, la solution de soude recueillie à l'étage de réextraction 10 du second cycle qui contient 3 g/l d'aluminium et une concentration en soude de 3N est recyclée dans la lessive Bayer épurée en gallium.

### Exemple 2

Le premier cycle d'extraction du gallium est identique à celui de l'exemple 1 et on récupère une solution basique contenant 1,35 g/l de gallium et 9 g/l d'aluminium.

Cette solution est diluée pour avoir une concentration en OH⁻ égale à environ 3N puis est mise en contact avec un solvant d'extraction identique à celui de l'exemple 1 dans une batterie d'extraction avec un rapport des débits pour obtenir un rapport phase organique / phase aqueuse égal à 0,1.

La solution de soude épurée en gallium est ensuite recyclée dans la lessive Bayer comme dans l'exemple 1.

Le solvant d'extraction chargée en gallium est mis en contact dans une batterie d'extraction liquide / liquide avec une solution de soude de concentration initiale égale à 9N avec un rapport phase organique / phase aqueuse égal à 6.

On obtient une solution de gallate de sodium comprenant notamment :
- Ga (OH)⁻₄: 27,5 g/l exprimé en Ga
- Al (OH)⁻₄: 5,5 g/l exprimé en Al
- [ OH ⁻ ]: 7,25 N

Cette solution peut être soumise à une électrolyse conduisant au gallium métal d'une part et à un électrolyte appauvri en gallium qui peut être recyclé dans une des batteries de réextraction du gallium.

## Revendications

1. Procédé de récupération du gallium contenu dans une solution basique (A) de lessive Bayer, consistant à mettre en contact cette solution basique (A) avec un milieu (I) contenant un agent extractant du gallium choisi dans la famille des hydroxyquinoleines substituées pour faire passer le gallium de la solution basique dans ledit milieu, et à réextraire le gallium de ce milieu dans une phase aqueuse par mise en contact avec ladite phase aqueuse, caractérisé en ce qu'il consiste à :
i) utiliser comme phase aqueuse de réextraction du gallium, une solution aqueuse basique (B) présentant une concentration en ions OH⁻ comprise entre 4N et 20N,
ii) à mettre en contact ladite solution aqueuse basique (B) chargée en gallium avec un second milieu (II) contenant un agent extractant du gallium choisi dans la famille des hydroxyquinoleines substituées pour faire passer le gallium de ladite solution aqueuse (B) dans le milieu (II)
iii) après séparation de la phase aqueuse (B) et du milieu (II), mettre en contact ce dernier avec une solution aqueuse (C) pour réextraire le gallium et à séparer ladite phase aqueuse chargée en gallium du milieu (II).

2. Procédé selon la revendication 1, caractérisé en ce que la solution aqueuse (C) est une solution aqueuse acide présentant une concentration en ions H+ comprise entre 6N et 11N.

3. Procédé selon l'une des revendications 1 ou 2, caractérisé en ce que le milieu (I) et le milieu (II) sont des solutions organiques d'agents extractants du gallium.

4. Procédé selon l'une des revendications 1 ou 2, caractérisé en ce que le milieu (I) ou (II) sont constituées par un support poreux sur lequel est imprégné un agent extractant du gallium.

5. Procédé selon la revendication 4, caractérisé en ce que le support poreux est choisi dans le groupe des résines synthétiques, charbon actif.

6. Procédé selon la revendication 5, caractérisé en ce que les résines synthétiques sont choisies dans le groupe comprenant les résines adsorbantes ou échangeuses d'ions.

7. Procédé selon l'une des revendications 1 à 6, caractérisé en ce que l'agent extractant est une hydroxyquinoléine substituée dont le substituant comprend au moins une liaison éthylénique.

8. Procédé selon l'une des revendications 1 à 6, caractérisé en ce que l'agent extractant est une hydroxyquinoléine substituée dont le substituant est saturé.

9. Procédé selon l'une des revendications 7 ou 8, caractérisé en ce que l'agent extractant est un mélange d'hydroxyquinoléines substituées.

10. Procédé selon l'une des revendications précédentes caractérisé en ce que la solution aqueuse basique (B) est une solution de soude.

11. Procédé selon l'une des revendications précédentes caractérisé en ce que la solution (B) est diluée avant d'être mise en contact avec le milieu (II).

12. Procédé selon l'une des revendications précédentes caractérisé en ce que la solution aqueuse (C) est une solution aqueuse acide et contient un acide choisi dans le groupe comprenant l'acide sulfurique, l'acide nitrique, l'acide chlorhydrique.

13. Procédé selon l'une des revendications 1 et 3 à 11, caractérisé en ce que la solution aqueuse (C) est une solution de base forte.

14. Procédé selon l'une des revendications précédentes, caractérisé en ce que la solution aqueuse basique (B) appauvrie en gallium en sortie de l'étape ii) est recyclée au moins en partie dans la solution basique (A) après extraction du gallium.

15. Procédé selon la revendication 14, caractérisé en ce que la solution aqueuse basique (B) est concentrée avant le recyclage précité.

16. Procédé selon l'une des revendications 1 à 3 et 7 à 15, caractérisé en ce que la solution d'agent extractant formant le milieu (II) après réextraction du gallium est recyclée au moins en partie dans la solution d'agent extractant formant le milieu (I), avant mise en contact avec la solution basique (A).

## Claims

1. A process for the recovery of gallium contained in a basic solution (A) of Bayer lye, consisting in contacting the basic solution (A) with a medium (I) containing an agent for extracting the gallium selected from the family of substituted hydroxyquinolines, to pass the gallium of the basic solution into said medium, and in re-extracting the gallium from the medium into an aqueous phase by contacting with said aqueous phase, characterised in that it consists in:
i) using as aqueous phase for the re-extraction of the gallium a basic aqueous solution (B) having an OH⁻ ion concentration of between 4N and 20N,
ii) contacting said basic aqueous solution (B) charged with gallium with a second medium (II) containing an agent for extracting the gallium selected from the family of substituted hydroxyquinolines to pass the gallium of said aqueous solution (B) into the medium (II)
iii) after separation of the aqueous phase (B) and medium (II), contacting this latter with an aqeuous solution (C) to re-extract the gallium, and separating said aqueous phase charged with gallium from the medium (II).

2. A process according to Claim 1, characterised in that the aqueous solution (C) is an aqueous acid solution having an H⁺ ion concentration of between 6N and 11N.

3. A process according to one of Claims 1 or 2, characterised in that the medium (I) and the medium (II) are organic solutions of agents for extracting the gallium.

4. A process according to one of Claims 1 or 2, characterised in that the medium (I) or the medium (II) are constituted of a porous support on which an agent for extracting the gallium is impregnated.

5. A process according to Claim 4, characterised in that the porous support is selected from the group of synthetic resins, active charcoal.

6. A process according to Claim 5, characterised in that the synthetic resins are selected from the group comprising adsorbing resins or ion exchange resins.

7. A process according to one of Claims 1 to 6, characterised in that the extracting agent is a substituted hydroxyquinoline, the substituent of which comprises at least one ethylenic bond.

8. A process according to one of Claims 1 to 6, characterised in that the extracting agent is a substituted hydroxyquinoline, the substituent of which is saturated.

9. A process according to one of Claims 7 or 8, characterised in that the extracting agent is a mixture of substituted hydroxyquinolines.

10. A process according to one of the preceding claims, characterised in that the basic aqueous solution (B) is a solution of sodium.

11. A process according to one of the preceding claims, characterised in that the solution (B) is diluted before being contacted with the medium (II).

12. A process according to one of the preceding claims, characterised in that the aqueous solution (C) is an aqueous acid solution and contains an acid selected from the group comprising sulphuric acid, nitric acid, hydrochloric acid.

13. A process according to one of Claims 1 and 3 to 11, characterised in that the aqueous solution (C) is a solution with a strong base.

14. A process according to one of the preceding claims, characterised in that the basic aqueous solution (B) with a low gallium content at the end of step ii) is recycled at least partially in the basic solution (A) after extraction of the gallium.

15. A process according to Claim 14, characterised in that the basic aqueous solution (B) is concentrated before the afore-mentioned recycling.

16. A process according to one of Claims 1 to 3 and 7 to 15, characterised in that after re-extraction of the gallium, the solution of extracting agent forming the medium (II) is recycled at least partially in the solution of extracting agent forming the medium (I), before being contacted with the basic solution (A).

## Patentansprüche

1. Verfahren zur Rückgewinnung des Galliums, das in einer basischen Lösung (A) von Bayer-Lauge enthalten ist, darin bestehend, daß diese basische Lösung (A) mit einem Milieu (I) in Kontakt gebracht wird, das ein Extraktionsmittel des Galliums enthält, ausgewählt aus der Gruppe der substutierten Hydroxychinoline, um das Gallium aus der basischen Lösung in dieses Milieu zu überführen und das Gallium aus diesem Milieu in eine wäßrige Phase durch Inkontaktbringen mit dieser wäßrigen Phase rückzuextrahieren, dadurch gekennzeichnet, daß es darin besteht:
i) als wäßrige Phase der Rückextraktion des Galliums eine basische wäßrige Lösung (B) zu verwenden, die eine Konzentration an OH⁻-Ionen zwischen 4N und 20N aufweist,
ii) diese basische wäßrige, mit Gallium beladene Lösung (B) mit einem zweiten Milieu (II) in Kontakt zu bringen, das ein Extraktionsmittel des Galliums ausgewählt aus der Gruppe der substituierten Hydroxychinoline enthält, um das Gallium aus dieser wäßrigen Lösung (B) in das Milieu (II) zu überführen,
iii) nach Trennung der wäßrigen Phase (B) und des Milieus (II) dieses letztere mit einer wäßrigen Lösung (C) in Kontakt zu bringen, um das Gallium rückzuextrahieren und diese wäßrige, mit Gallium beladene Phase von dem Milieu (II) zu trennen.

2. Verfahren gemäß Anspruch 1, dadurch gekennzeichnet, daß die wäßrige Lösung (C) eine saure wäßrige Lösung ist, die eine Konzentration an H⁺-Ionen zwischen 6N und 11N aufweist.

3. Verfahren gemäß einem der Ansprüche 1 oder 2, dadurch gekennzeichnet, daß das Milieu (I) und das Milieu (II) organische Lösungen von Extraktionsmitteln des Galliums sind.

4. Verfahren gemäß einem der Ansprüche 1 oder 2, dadurch gekennzeichnet, daß das Milieu (I) oder (II) aus einem porösen
Träger besteht, auf dem ein Extraktionsmittel des Galliums imprägniert ist.

5. Verfahren gemäß Anspruch 4, dadurch gekennzeichnet, daß der poröse Träger ausgewählt ist aus der Gruppe der synthetischen Harze, aktivem Kohlenstoff.

6. Verfahren gemäß Anspruch 5, dadurch gekennzeichnet, daß die synthetischen Harze ausgewählt sind aus der Gruppe bestehend aus den adsorbierenden oder ionenaustauschenden Harzen.

7. Verfahren gemäß einem der Ansprüche 1 bis 6, dadurch gekennzeichnet, daß das Extraktionsmittel ein substituiertes Hydroxychinolin ist, dessen Substituent mindestens eine ethylenische Bindung enthält.

8. Verfahren gemäß einem der Ansprüche 1 bis 6, dadurch gekennzeichnet, daß das Extraktionsmittel ein substituiertes Hydroxychinolin ist, dessen Substituent gesättigt ist.

9. Verfahren gemäß einem der Ansprüche 7 oder 8, dadurch gekennzeichnet, daß das Extraktionsmittel ein Gemisch von substituierten Hydroxychinolinen ist.

10. Verfahren gemäß einem der vorhergehenden Ansprüche, dadurch gekennzeichnet, daß die basische wäßrige Lösung (B) eine Natriumhydroxidlösung ist.

11. Verfahren gemäß einem der vorhergehenden Ansprüche, dadurch gekennzeichnet, daß die Lösung (B) verdünnt wird, bevor sie mit dem Milieu (II) in Kontakt gebracht wird.

12. Verfahren gemäß einem der vorhergehenden Ansprüche, dadurch gekennzeichnet, daß die wäßrige Lösung (C) eine saure wäßrige Lösung ist und eine Säure enthält, ausgewählt aus der Gruppe umfassend Schwefelsäure, Salpetersäure, Salzsäure.

13. Verfahren gemäß einem der Ansprüche 1 und 3 bis 11, dadurch gekennzeichnet, daß die wäßrige Lösung (C) eine Lösung einer starken Base ist.

14. Verfahren gemäß einem der vorhergehenden Ansprüche, dadurch gekennzeichnet, daß die basische wäßrige Lösung (B), verarmt an Gallium am Ausgang der Stufe ii) mindestens zum Teil in die basische Lösung (A) nach der Extraktion des Galliums rückgeführt wird.

15. Verfahren gemäß Anspruch 14, dadurch gekennzeichnet, daß die basische wäßrige Lösung (B) vor der erwähnten Rückführung konzentriert wird.

16. Verfahren gemäß einem der Ansprüche 1 bis 3 und 7 bis 15, dadurch gekennzeichnet, daß die Lösung des Extraktionsmittels, welche das Milieu (II) bildet, nach der Rückextraktion des Galliums mindestens zum Teil in die Lösung des Extraktionsmittels, welche das Milieu (I) bildet, vor dem Inkontaktbringen mit der basischen Lösung (A) rückgeführt wird.
